# EUROPÄISCHE PATENTSCHRIFT

(11) **EP 0 301 389 B1**
(45) Veröffentlichungstag und Bekanntmachung des Hinweises auf die Patenterteilung: **03.02.1993**
(21) Anmeldenummer: 88111632.1
(22) Anmeldetag: 20.07.1988
(51) Int. Cl.: G01B 5/00, G01B 7/00, G01B 11/00

(54) **Tastkopf für Koordinatenmessgeräte**
Feeler head for coordinate measuring machines
Palpeur pour des appareils de mesure de coordonnées

(30) Priorität: 30.07.1987 DE 3725207
(43) Veröffentlichungstag der Anmeldung: 01.02.1989
(73) Patentinhaber: Firma Carl Zeiss, D-73446 Oberkochen (DE); FA. CARL ZEISS; CARL ZEISS-STIFTUNG, D-73447 Oberkochen (DE)
(72) Erfinder: Herzog, Klaus, D-7082 Oberkochen (DE); Szenger, Franz, D-7923 Königsbronn (DE)

(56) Entgegenhaltungen:
- EP-A- 0 025 485
- DE-B- 2 242 355
- DE-C- 3 135 495
- US-A- 4 364 179

## Beschreibung

Die vorliegende Erfindung betrifft einen Tastkopf für Koordinatenmeßgeräte gemäß dem Oberbegriff des Anspruchs 1.

Das Koordinatenmeßgerät dient dazu, den Tastkopf gesteuert dreidimensional solange zu bewegen, bis der Taststift das Meßobjekt an einer vorgegebenen Stelle berührt, wobei die Raumkoordinaten im Augenblick des Antastens hochgenau festgehalten werden. Ein nachgeschalteter Rechner ermittelt aus den Raumkoordinaten verschiedener Antaststellen die gesuchten Maße des Meßobjektes.

Es sind eine Vielzahl von Tastköpfen für Koordinatenmeßgeräte bekannt, die jedoch alle nur in einer bestimmten Raumlage verwendet werden können.

So ist aus der DE-PS 22 42 355 ein Tastkopf bekannt, der aus einer torsionssteifen Aneinanderreihung von spiel- und reibungsfreien Geradführungssystemen besteht, die miteinander ein räumliches Koordinatensystem bilden und den Tastkopf tragen. Dieser Tastkopf kommt in vertikaler Raumlage zum Einsatz, welche der z-Achse entspricht. Um den Tastkopf zu entlasten, ist ein in z-Richtung wirkender Gewichtsausgleich vorgesehen. Dieser besteht aus einer Feder, die zwischen dem maschinenfesten Teil des Tastkopfes und dem zur Taststiftaufnahme dienenden Element der Geradführungssysteme angeordnet ist. Die Federkraft dieser Feder ist über einen Motor verstellbar, der den maschinenfesten Aufhängepunkt der Feder solange in z-Richtung verschiebt, bis ein im Geradführungssystem der z-Achse angeordneter Null-Indiaktor bei Erreichen der Nullage diese Verschiebung stoppt.

Dieser bekannte Tastkopf ist nur in einer einzigen Raumlage einsetzbar, da die Feder nur eine Gewichtsentlastung in z-Richtung bewirkt, welche beispielsweise beim Einsetzen unterschiedlicher Taststifte vorgenommen werden muß. Um ohne Umspannen des Meßobjektes auch nicht direkt zugängliche Flächen dieses Objektes antasten zu können, werden die verschiedensten Taststifte mit dem Tastkopf verbunden, wie dies auch in der DE-PS 22 42 355 dargestellt ist.

Es gibt jedoch eine ganze Reihe von Meßaufgaben, die sich mit einem nur in einer Raumlage einsetzbaren Tastkopf nur sehr schwierig oder überhaupt nicht lösen lassen. Dazu gehört beispielsweise die Aufgabe im Inneren eines Werkstückes zu messen, wobei die anzutastende Fläche soweit im Inneren des Werkstuckes liegt, daß sie nur mit einem sehr langen Taststift oder überhaupt nicht erreichbar ist.

Aus der US-PS 4 364 179 ist ein Tastkopf bekannt, der in horizontaler Raumlage einsetzbar ist. Der Taststift ist hier an einem zylindrischen Körper befestigt, der im Tastkopfgehäuse in horizontaler Richtung verschiebbar gelagert ist. Dieser zylindrische Körper ist über eine Buchse in einem äußeren Gehäuseteil kardanisch so aufgehängt, daß er um zwei senkrecht aufeinander stehende Achsen verschwenkbar ist.

Die Austarierung erfolgt bei diesem bekannten Tastkopf manuell durch Verschieben von Gewichten auf dem zylindrischen Körper so, daß die Drehmomente zu beiden Seiten der durch das Kardangelenk definierten horizontalen Drehachse gleich groß sind. Eine solche Tarierung ist nur für eine einzige Achse wirksam, so daß der Tastkopf nur in seiner horizontalen Raumlage einsetzbar ist. Zudem ist diese Art der Tarierung umständlich und nicht automatisierbar. Sie bringt den Nachteil mit sich, daß durch die Tariergewichte die beim Antasten zu bewegende Masse vergrößert wird, was die erreichbare Genauigkeit nachteilig beeinflußt.

Es ist nun die Aufgabe der vorliegenden Erfindung, einen Tastkopf nach dem Oberbegriff des Anspruches 1 so auszubilden, daß er völlig lageunabhängig verwendbar ist.

Die Lösung dieser Aufgabe erfolgt bei einem Tastkopf der eingangs genannten Art durch die im kennzeichnenden Teil des Anspruches 1 angegebenen Merkmale.

Ein solcher Tastkopf bringt den Vorteil mit sich, daß er ohne Taststiftwechsel eine Antastung des Meßobjektes aus jeder beliebigen Richtung ermöglicht, so daß eine Messung beliebig gestalteter Meßobjekte und insbesondere auch eine Messung im Innern von Werkstücken ermöglicht wird. Dabei läßt sich bei entsprechender Ausbildung und Ansteuerung des den Tastkopf bewegenden Koordinatenmeßgerätes auch erreichen, daß die Antastung des Meßobjektes stets in der Normalen zur Antastfläche erfolgt, so daß eine hohe Meßgenauigkeit erreicht wird.

Die Tarierung wird über Federn bewirkt, von denen mindestens eine in ihrer Federkraft einstellbar ist. Diese Ausbildung der Tariereinrichtung ermöglicht es, das Gewicht des Tastkopfes niedrig zu halten, so daß die Meßgenauigkeit gegenüber den Tastköpfen nach dem Stand der Technik nicht nachteilig beeinflußt wird.

Weitere zweckmäßige Ausgestaltungen des Tastkopfes nach der Erfindung sind Gegenstand der abhängigen Ansprüche 2-7.

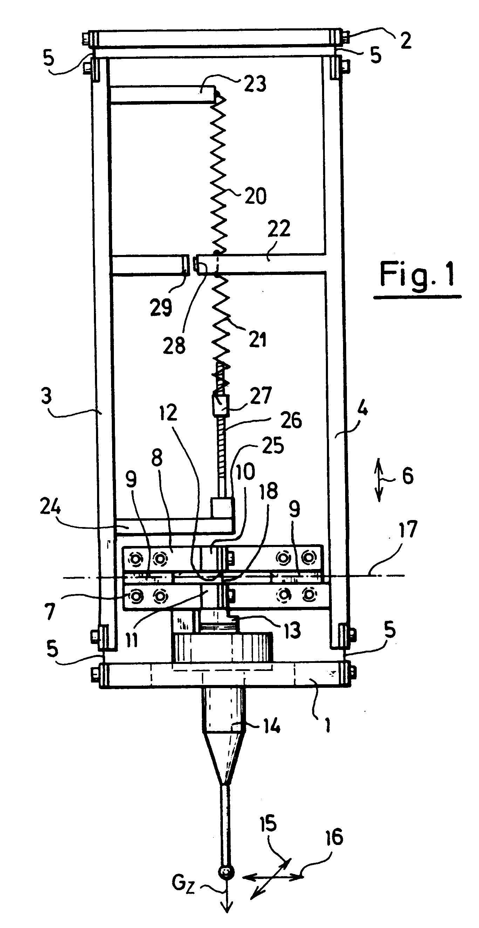

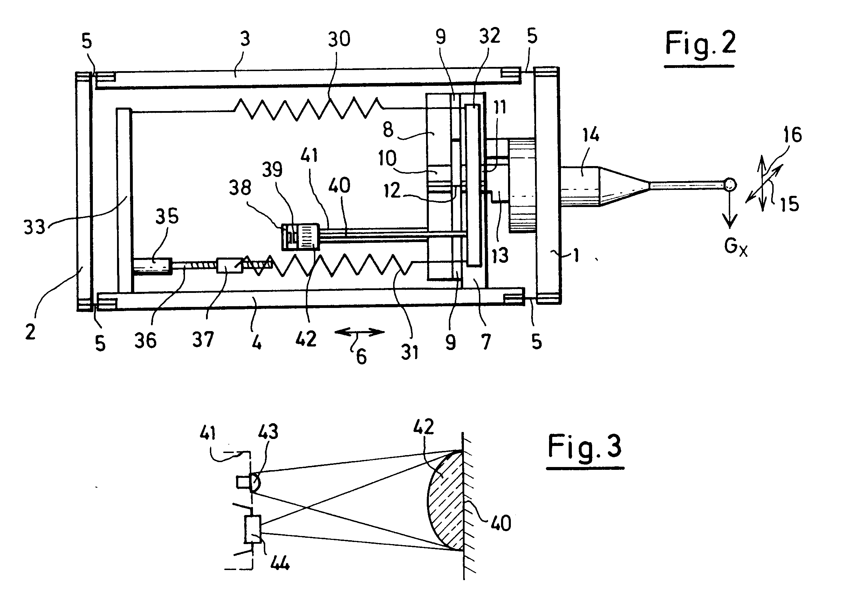

Die Erfindung wird im folgenden anhand der ein Ausführungsbeispiel darstellenden Figuren 1-4 näher beschrieben. Aus Gründen der Übersichtlichkeit sind dabei in den Darstellungen der Figuren 1 und 2 nur die das räumliche Koordinatensystem bildenden Federsysteme des Tastkopfes dargestellt, während auf die Darstellung der Meß- Feder- und Dämpfungsmittel verzichtet ist. Eine ausführlichere Darstellung des in diesen Figuren gezeigten Tastkopfes findet sich in der Patentanmeldung DE-P 37 25 205.4 der Anmelderin, welche zusammen mit der vorliegenden Anmeldung eingereicht wurde. Im einzelnen zeigen:
- Figur 1: einen Tastkopf mit einer Tariereinrichtung, die in Richtung der Achse des Taststiftes wirkt;
- Figur 2: einen Tastkopf mit einer Tariereinrichtung, die senkrecht zur Achse des Taststiftes wirkt;
- Figur 3: einen Null-Indikator wie er in den Tarjereinrichtungen der Figuren 1 und 2 verwendet ist;
- Figur 4: die dem Tastkopf nachgeschaltete, die Tarierung steuernde Elektronik in schematischer Darstellung.

In den Figuren 1 und 2 ist ein Federparallelogramm dargestellt, das aus den Seitenteilen (1-4) besteht, die durch Blattfedern (5) miteinander verbunden sind. Anstelle der Blattfedern können auch Kreuzfedergelenke vorgesehen sein, die aus zwei rechtwinklig zueinander angeordneten Blattfedern bestehen. Das Seitenteil (3) ist fest mit dem Koordinatenmeßgerät verbunden, während das Seitenteil (4) im Sinne des Pfeiles (6) auslenkbar ist.

In den Figuren ist auf die Darstellung des Koordinatenmeßgerätes und insbesondere auch auf die Darstellung der Mittel zur Halterung und Bewegung des Tastkopfes verzichtet. Diese Mittel sind so ausgebildet, daß sie den Tastkopf in jede beliebige Raumlage bewegen und aus jeder Raumlage eine Antastbewegung durchführen können.

Mit dem Seitenteil (4) ist ein Träger (7) fest verbunden, welcher über Blattfedern (9) mit einem weiteren Träger (8) den ersten Teil eines Kardangelenkes bildet. Senkrecht zu den Trägern (7) und (8) sind zwei weitere Träger (10) und (11) angeordnet, wobei die Träger (8) und (10) starr miteinander verbunden sind und ein Kreuz bilden. Die unteren Träger (7) und (11) sind jeweils mit einer Ausnehmung versehen, welche eine Relativbewegung dieser Träger ermöglicht. Die beiden Träger (10) und (11) sind über Blattfedern miteinander verbunden, wobei in den Figuren 1 und 2 nur eine dieser Federn sichtbar ist. Mit dem unteren Träger (11) ist über ein Bauteil (13) ein Taststift (14) fest verbunden, wobei der Taststift (14) durch eine kreisförmige Ausnehmung der Platte (1) so hindurchragt, daß er im Sinne der Pfeile (15) und (16) frei beweglich ist.

Beim Bewegen im Sinne des Pfeiles (15) wird der Taststift (14) um die Achse (17) geschwenkt, welche durch die Elemente (7,8,9) gebildet ist. Eine Bewegung des Taststiftes (14) im Sinne des Pfeiles (16) ist durch das System (10,11,12) ermöglicht, welches eine weitere Drehachse bildet, die senkrecht zur Achse (17) verläuft und sich mit dieser im Punkt (18) schneidet.

Wird der Tastkopf in der in Figur 1 dargestellten vertikalen Lage verwendet, so greift an ihm das Gewicht G_{z} an. Durch diese Gewichtskraft wird das Seitenteil (4) des Federparallelogrammes im Sinne des Pfeiles (6) nach unten gezogen und zwar solange bis ein hier nicht dargestellter Anschlag zur Wirkung kommt und diese Bewegung begrenzt. Um diese Wirkung der Gewichtskraft G_{z} auszuschalten ist eine Tariereinrichtung vorgesehen.

Diese Tariereinrichtung besteht aus den Federn (20) und (21), welche an dem Arm (22) aufgehängt sind, welcher fest mit dem Seitenteil (4) verbunden ist. Mit dem gerätefesten Seitenteil (3) des Federparallelogrammes sind fest zwei Tragarme (23) und (24) verbunden, mit welchen die anderen der Federn (20) und (21) in Verbindung stehen.

Die Federwirkung der Feder (21) ist einstellbar. Zu diesem Zweck ist mit dem Träger (24) ein Motor (25) fest verbunden, welcher bei Betätigung eine Gewindespindel (26) dreht. Auf dieser Gewindespindel ist eine, mit Innengewinde versehene Hülse (27) angeordnet, an welcher die Feder (21) aufgehängt ist. Durch Betätigen des Motors (25) läßt sich also die Hülse (27) und damit der Aufhängepunkt der Feder (21) verstellen, so daß die von der Feder (21) ausgeübte Kraft einstellbar ist.

Die Null-Position des Gelenkvierecks (1-5) wird mittels eines Null-Indikators (28,29) festgestellt. Sobald bei einer Abweichung aus der Null-Position dieser Indikator ein Signal liefert, wird der Motor (25) entsprechend betätigt.

Die Tarierung des Tastkopfes der Figur 1 erfolgt beispielsweise in der Art, daß in der in Figur 1 dargestellten Raumlage eine Feder (20) gewählt wird, welche die Gewichtskraft G_{z} etwas überkompensiert, so daß der Null-Indikator (28,29) ein Signal liefert. Dieses Signal betätigt den Motor (25), welcher die Hülse (27) solange nach unten verschiebt, bis die genaue Null-Position erreicht und vom Indikator (28,29) detektiert wird. Wird nun der Tastkopf um 90° in eine Horizontalposition verschwenkt, so entfällt die Gewichtskraft G_{z}. Damit zieht die Feder (20) den Arm (22) in Richtung auf den Arm (23). Diese Bewegung wird vom Null-Indikator (28,29) wieder detektiert und es wird ein Signal erzeugt, welches den Motor (25) so in Tätigkeit setzt, daß die Hülse (27) in Richtung auf den Motor bewegt wird und zwar solange bis die Kraft der Feder (21) in etwa der Gewichtskraft G_{z} entspricht und der Null-Indikator (28,29) wieder die Nullposition anzeigt.

Wird der Tastkopf um weitere 90° gedreht, so daß also der Taststift (14) jetzt nach oben zeigt, so greift die Gewichtskraft G_{z} in einer Richtung an, welche dem Pfeil in Figur 1 entgegengesetzt ist. Dadurch bewegt sich wieder der Träger (22) in Richtung auf den Träger (23) und der Null-Indikator (28,29) liefert ein Signal. Dieses veranlaßt den Motor (25) die Hülse (27) weiter in Richtung auf den Motor (25) zu bewegen und zwar solange bis der Null-Indikator (28,29) wieder die Null-Position detektiert.

Wie diese Erklärung zeigt, muß der Verstellbereich der Feder (21) etwa zwischen null und 2 x G_{z} liegen. Für alle anderen Raumlagen wird die Kraft der Feder (21) zwischen diesen beiden Grenzwerten eingestellt und zwar jeweils solange, bis der Null-Indikator (28,29) die Null-Position anzeigt.

In Figur 2 ist die Tariereinrichtung für eine Tarierung des Tastkopfes in Richtung des Pfeiles (16) dargestellt. An dem horizontal angeordneten Tastkopf greift die Kraft Gₓ an, welche über das Federgelenk (10,11,12) den Taststift (14) nach unten zu ziehen sucht.

Mit dem Arm (11) des Federgelenkes (10,11,12) ist ein Arm (32) fest verbunden, der also bei einer Bewegung des Taststifts (14) unter der Wirkung der Gewichtskraft Gₓ um die vom Federsystem (10,11,12) gebildete Achse verschwenkt wird. An dem Träger (32) greifen zwei Federn (30) und (31) an, wobei die Kraft der Feder (31) einstellbar ist. Die beiden anderen Aufhängepunkte der Federn (30) und (31) sind mit einem Träger (33) verbunden, welcher in fester Verbindung mit dem Teil (4) des Gelenkvierecks (1-5) steht. Der Träger (33) ist mit einem Motor (35) verbunden, welcher über eine Gewindespindel (36) die Hülse (37) und damit den einen Aufhängepunkt der Feder (31) verstellt.

Die Tarierung bezüglich der Gewichtskraft G_{z} erfolgt durch Betätigung des Motors (35) in der im Zusammenhang mit Figur 1 beschriebenen Weise.

Zur Sensierung der Null-Position ist hier ein Null-Indikator (38,39) vorgesehen, welcher auf den Trägerarmen (40) und (41) angeordnet ist. Der Arm (40) ist dabei fest mit dem Träger (32) verbunden, während der Arm (41) fest mit dem Gelenkteil (8) in Verbindung steht. Bei einer Bewegung des Taststiftes (14) in Richtung des Pfeiles (16) bewegen sich also die Teile des Null-Indikators (38,39) gegeneinander und erzeugen ein Signal. Mit den beiden Trägern (40) und (41) kann jeweils ein Meßgitter verbunden sein, von denen nur eines, nämlich das Gitter (42) in Figur 2 dargestellt ist. Die beiden Meßgitter dienen dazu inkrementale Wegmeßsignale zu erzeugen.

Es ist ohne weiteres verständlich, daß die Kraft der Feder (31) in etwa zwischen den Grenzen null und 2 x Gₓ einstellbar sein muß. Ist dies der Fall, so kann der Tastkopf bezüglich des Federgelenkes (10,11,12) durch die in Figur 2 dargestellte Tariereinrichtung in jeder Raumlage des Tastkopfes in Null-Position gehalten werden.

Auf eine Darstellung der Tariereinrichtung bezüglich der Richtung (15) ist verzichtet, da diese Tariereinrichtung entsprechend aufgebaut ist wie diejenige der Figur 2.

Der Null-Indikator (38,39) der Figur 2 soll anhand der Figur 3 beispielsweise beschrieben werden. Wie aus dieser Figur hervorgeht, ist am vorderen Ende des Armes (40) eine Zylinderlinse (42) vorgesehen, während am Ende des Armes (41) eine Leuchtdiode (43) und eine Differenzialdiode (44) vorgesehen ist. Das von der Lichtdiode (43) ausgehende Licht wird über die Zylinderlinse (42), deren plane Rückfläche verspiegelt ist, in einen linienförmigen Fokus abgebildet, welcher auf der Differenzdiode (44) liegt. Diese Differenzdiode ist so ausgebildet, daß sie eine Auslenkung der Fokuslinie aus der durch die Diode selbst gegebenen Null-Position hoch empfindlich sensiert.

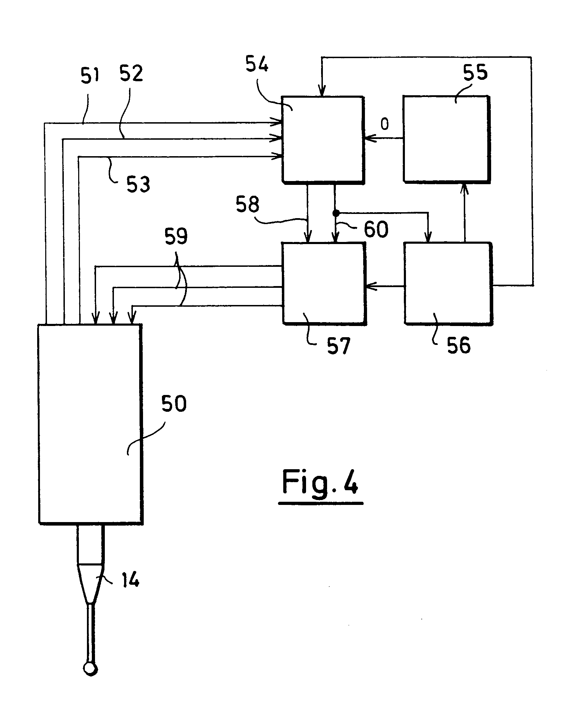

In der schematischen Darstellung der Figur 4 ist der in den Figuren 1 und 2 gezeigte Tastkopf schematisch mit (50) bezeichnet. Dieser Tastkopf enhält drei Null-Indikatoren, von denen in Figur 1 und 2 jeweils einer dargestellt ist. Im folgenden wird ein einfaches Verfahren zur Tarierung erläutert.

Die Signale der Null-Indikatoren werden bei diesem Verfahren über die Leitungen (51,52,53) einem Komparator (54) zugeführt. Dieser Komparator erhält über eine Schaltung (55) mindestens ein Schwellwertsignal zugeführt. Dadurch wird bewirkt, daß der Komparator (54) bei mindestens einer Stufe schaltet, welche beispielsweise als 0 bezeichnet werden soll.

Nimmt der Taster (50) bei einem Meßvorgang eine neue Raumlage ein, so ist vor Einleiten des entsprechenden Meßvorganges ein Tarierschritt einzuleiten. Zu diesem Zweck wird über eine schematisch dargestellte Schaltung (56) bewirkt, daß die Elektronik-Komponenten (54,55 und 57) in Tätigkeit gesetzt werden. Erzeugt nun einer der Null-Indikatoren, beispielsweise der Null-Indikator (38,39) der Figur 2 ein Signal, so wird dieses beispielsweise über die Leitung (52) dem Komparator (54) zugeführt. Dieser erkennt das Vorzeichen des Signales und liefert über die Leitung (58) der Stromquelle (57) ein Signal zu, welches diese veranlaßt über eine der Leitungen (59) dem betreffenden Tariermotor, beispielsweise dem Motor (35) der Figur 2, ein Signal zuzuführen. Dieses Signal bewirkt, daß der Tariermotor in der richtigen Drehrichtung betätigt wird und die Kraft der angeschlossenen Feder, beispielsweise der Feder (31) in Figur 2, verstellt. Sobald diese Verstellung bewirkt ist, liefert der Null-Indikator (38,39) ein Null-Signal, welches bewirkt, daß über der Leitung (60) ein Abschaltsignal anliegt. Dieses Abschaltsignal schaltet einmal die Schaltung (56) und zum anderen die Stromquelle (57) ab, so daß also der Tariervorgang beendet ist.

Neben der beschriebenen einfachen Tariermethode ist es auch möglich aus dem Nullagenindikator und dem zugeordneten Tarierantrieb einen Regelkreis zu bilden. Der Tarierantrieb verstellt dann die in ihrer Federkraft einstellbare Feder solange, bis der Nullagenindikator eine vorgegebene Sollspannung erreicht.

Die Tarierung des Tastkopfs muß nach jeder Lageänderung aktiviert werden. Dabei erfolgt der Tariervorgang jeweils im nicht-angetasteten Zustand, d.h. solange der Taststift (14) kein Objekt berührt und bei Beschleunigung Null, d.h. im Ruhezustand. Beim eigentlichen Meßvorgang wird über die Schaltung (56) die Tarierung abgeschaltet.

Im Zusammenhang mit den Zeichnungen ist ein Ausführungsbeispiel erläutert worden, bei dem jeweils eine Feder der Tariereinrichtung bezüglich ihrer Federkraft einstellbar ist. Es ist auch ohne weiteres denkbar diese Tariereinrichtung so auszubilden, daß beide Federn der Tariereinrichtung bezüglich ihrer Federkraft einstellbar sind. Dadurch läßt sich eventuell ein schnellerer Ablauf des Tariervorganges erreichen.

## Patentansprüche

1. Tastkopf für Koordinatenmeßgeräte mit einem ein räumliches Koordinatensystem definierenden, torsionssteifen, spiel- und reibungsfreien Federsystem, das einen in allen drei Raumrichtungen auslenkbaren Taststift (14) trägt, und dem in einer Raumachse (Z) eine Tariereinrichtung für den Gewichtsausgleich zuschaltbar ist, dadurch gekennzeichnet, daß dem Federsystem Tariereinrichtungen für jede der drei Raumachsen (6,15,16) zuschaltbar sind, mit denen in jeder Raumlage des Tastkopfs (50) die Nullposition des Federsystems automatisch einstellbar ist, wobei jede der Tariereinrichtungen zwei Federn (20,21;30,31) besitzt, die zu beiden Seiten eines ersten Elements (20,32) befestigt sind, das sich bei einer lagebedingten Auslenkung des zugeordneten Federsystems (1-5) bzw. (10-12) aus seiner Nullposition bewegt, daß beide Federn (20,21;30,31) an einem bei dieser Auslenkung bewegungsinvarianten zweiten Element (23,33) aufgehängt sind und daß mit mindestens einer der Federn (21,31) ein Motor (25,35) zur Einstellung der Federkraft verbunden ist.

2. Tastkopf nach Anspruch 1, dadurch gekennzeichnet, daß ein Nullagenindikator (28,29;38,39) vorgesehen ist, der bei einer Auslenkung des Federsystems ein die Auslenkrichtung kennzeichnendes Signal für die Steuerung des Motors (25,35) erzeugt.

3. Tastkopf nach Anspruch 1 und 2, dadurch gekennzeichnet, daß mit dem translatorisch bewegbaren Teil (4) eines torsionssteifen, spiel- und reibungsfreien Geradführungssystems (1-5) ein aus zwei gekreuzten Federgelenken (7-9 und 10-12) gebildetes Kardangelenk verbunden ist, das den Taststift (14) trägt und daß an jedem der bei einer Auslenkung des Taststifts (14) um eine der Achsen des Kardangelenks verschwenkten Gelenkteil (8,11) beidseitig der jeweiligen Achse zwei Federn (30,31) angreifen, die am translatorisch bewegbaren Teil (4) des Geradführungssystems (1-5) aufgehängt sind, wobei jeweils mindestens eine dieser Federn (31) bezüglich ihrer Federkraft einstellbar ist.

4. Tastkopf nach Anspruch 2 und 3, dadurch gekennzeichnet, daß beide Federn der Tariereinrichtung bezüglich ihrer Federkraft einstellbar sind.

5. Tastkopf nach Anspruch 2 und 3, dadurch gekennzeichnet, daß die Einrichtung zur Einstellung der Federkraft jeweils aus einem mit dem bewegungsinvarianten Element (23,33) der Tariereinrichtung verbundenen Motor (25,35) zum Drehen einer Gewindespindel (26,36) besteht und daß diese Gewindespindel eine mit Innengewinde versehene Hülse (27,37) trägt an der die in ihrer Federkraft einstellbare Feder (21,31) aufgehängt ist.

6. Tastkopf nach Anspruch 2, dadurch gekennzeichnet, daß der Nullagen-Indikator Teil eines Wegmeßsystems zur Erzeugung inkrementaler Signale ist.

7. Tastkopf nach Anspruch 2, gekennzeichnet durch einen Opto-Elektronischen-Nullagen-Indikator (42,43,44).

## Claims

1. A probe head for coordinate-measuring instruments having a torsionally rigid play-fee and friction-free suspension system which defines a spatial coordinate system and carries a probe pin (14) which can be deflected in all three coordinates in space and which can be switched to a taring device for one spatial direction (z), characterized by the fact that, for each of the three spatial directions (6, 15, 16) taring devices can be switched to the suspension system, which taring devices are for automatically setting the zero position of the suspension system and wherein each taring device comprises two springs (20, 21; 30, 31) which are preloaded to act on both sides of a first element (22, 32) which is displaceable out of its zero position in response to gravitationally induced deflection of the associated coordinate suspension (1-5; 10-12); both springs (20, 21; 30, 31) being connected for preloading reference to a second element (23, 33) which is independent of displacement responsive to said deflectiong; at least one of the springs (21, 31) being connected to a motor (25, 35) for controlling the spring force.

2. A probe head according to claim 1, characterized by a zero-position indicator (28, 29; 38, 39) responsive to a deflection of the suspension system to produce a signal which characterizes the direction of deflection and is used for control of said motor (25, 35).

3. A probe head according to claims 1 and 2, characterized by the fact that the torsionally rigid play-free and friction-free suspension system consists of a linear guidance system (1-5) having a linear movable part (4) connected to a Hooke's joint which is formed of two crossed spring joints (7-9 and 10-12) and bears the probe pin (14); and that on each of the joint parts (8, 11) which upon a deflection of the probe pin (14) is swung around one of the axes of the Hooke's joint, two springs (30, 31) act on both sides of the corresponding axis, the springs being attached said mobable part (4) of the linear guidance system (1-5), in each case at least one of these springs (31) being adjustable in its spring force.

4. A probe head according to claims 2 and 3, characterized by the fact that both springs of the taring device are adjustable with respect to their spring force.

5. A probe head according to claims 2 and 3, characterized by the fact that the device for adjusting the spring force consists in each case of a motor (25, 35) for turning a threaded sprindle (26, 36), the motor being connected to the movement-invariant element (23, 33) of the taring device; and that said threaded spindle bears a sleeve (27, 37) provided with an internal thread, on which sleeve the spring (21, 31) of adjustable spring force is attached.

6. A probe head according to claim 2, characterized by the fact that the zero-position indicator is part of a displacement-measuring system for producing incremental signals.

7. A probe head according to claim 2, characterized by an optoelelctronic zero-position indicator (42, 43, 44).

## Revendications

1. Palpeur pour appareils de mesure en coordonnées, comprenant un système à ressorts rigide en torsion, ne présentant pas de jeu ni de frottement et définissant un système de coordonnées spatiales, qui porte une tige de palpage (14) susceptible d'être déviée suivant les trois directions orthogonales dans l'espace et auquel peut être conjugué un dispositif de tarage pour la compensation du poids suivant un axe spatial (z), caractérisé en ce que des dispositifs de tarage pour chacun des trois axes spatiaux (6, 15, 16) peuvent être conjugués au système à ressorts, dispositifs par lesquels la position zéro du système à ressorts est réglable automatiquement dans toute position ou orientation du palpeur (50) dans l'espace, chacun des dispositifs de tarage possédant deux ressorts (20, 21; 30, 31) fixés des deux côtés d'un premier élément (20, 32) qui s'écarte de sa position zéro lors d'une déviation du système à ressorts coordonné (1-5 ou 10-12) provoquée par un changement d'orientation dans l'espace, que les deux ressorts (20, 21; 30, 31) sont attachés à un second élément (23, 33) restant immobile lors d'une telle déviation, et qu'un moteur (25, 35) pour le réglage de la force du ressort est accouplé à au moins l'un des ressorts (21, 31).

2. Palpeur selon la revendication 1, caractérisé en ce qu'il comprend un indicateur de la position zéro (28, 29; 38, 39) qui, lors d'une déviation du système à ressorts, génère un signal indiquant le sens de la déviation pour la commande du moteur (25, 35).

3. Palpeur selon les revendications 1 et 2, caractérisé en ce que le système à ressorts est un système de guidage droit (1-5) rigide en torsion, ne présentant pas de jeu ni de frottement, qui comporte une partie (4) mobile en translation à laquelle est relié un joint universel constitué de deux articulations à ressorts croisés (7-9 et 10-12) et portant la tige de palpage (14), et que deux ressorts (30, 31) attaquent chaque partie d'articulation (8, 11) pivotant autour d'un des axes du joint universel lors d'une déviation d'une tige de palpage (14), les deux ressorts en question attaquant ladite partie d'articulation des deux côtés de l'axe concerné et étant attachés à la partie (4) mobile en translation du système de guidage droit (1-5), la force d'au moins un de ces ressorts (31) étant réglable.

4. Palpeur selon les revendications 2 et 3, caractérisé en ce que la force des deux ressorts du dispositif de tarage est réglable.

5. Palpeur selon les revendications 2 et 3, caractérisé en ce que chaque dispositif pour le réglage de la force du ressort correspondant comprend un moteur (25, 35) relié à l'élément immobile (23, 33) du dispositif de tarage et servant à faire tourner une broche filetée (26, 36), et que cette broche porte un manchon (27, 37) pourvu d'un filetage intérieur et auquel est attaché le ressort (21, 31) dont la force est réglable.

6. Palpeur selon la revendication 2, caractérisé en ce que l'indicateur de la position zéro fait partie d'un système de mesure de déplacements conçu pour générer des signaux incrémentaux.

7. Palpeur selon la revendication 2, caractérisé par un indicateur de la position zéro (42, 43, 44) de type optoélectronique.
